# EUROPEAN PATENT SPECIFICATION

(11) **EP 2 747 878 B1**
(45) Date of publication and mention of the grant of the patent: **10.04.2019**
(21) Application number: 12780855.8
(22) Date of filing: 27.09.2012
(51) Int. Cl.: B01D 53/86, B01D 53/94, B01J 23/34, B01J 37/02, B01J 37/08, B01J 35/00, B01J 35/04, B01J 35/10

(54) **PROCESS FOR PREPARING AN OXIDIZING CATALYST AND A POST-TREATMENT SYSTEM OF AN EXHAUST GAS**
VERFAHREN ZUR HERSTELLUNG EINES OXIDATIONSKATALYSATORS UND EINES ABGASNACHBEHANDLUNGSSYSTEMS
PROCÉDÉ POUR LA PRÉPARATION D'UN CATALYSEUR D'OXYDATION ET D'UN SYSTÈME DE POST-TRAITEMENT D'UN GAZ D'ÉCHAPPEMENT

(30) Priority: 30.09.2011 IT MI20111780; 29.12.2011 US 201161581284 P
(43) Date of publication of application: 02.07.2014
(73) Proprietor: Pirelli Tyre S.p.A., 20126 Milano (IT)
(72) Inventor: SIN XICOLA, Agustin, I-10060 Frossasco (TO) (IT); AMBROSINI, Tiziano, I-20019 Settimo Milanese (MI) (IT); RUSSO, Nunzio, I-10124 Torino (IT); FINO, Debora, I-10124 Torino (IT)
(74) Representative: Porta, Checcacci & Associati S.p.A
(86) International application number: PCT/IB2012/055160
(87) International publication number: WO 2013/046150

(56) References cited:
- EP-A1- 1 982 762
- JP-A- 2004 230 223
- HAN ET AL: "Coral-like nanostructured alpha-Mn2O3 nanaocrystals for catalytic combustion of methane", CATALYSIS TODAY, ELSEVIER, NL, vol. 131, no. 1-4, 26 November 2007 (2007-11-26), pages 35-41, XP022432508, ISSN: 0920-5861, DOI: 10.1016/J.CATTOD.2007.10.016
- ZHAO Q ET AL: "Effects of processing parameters on the surface area of Mn2O3 at elevated temperatures", MICROPOROUS AND MESOPOROUS MATERIALS, ELSEVIER SCIENCE PUBLISHING, NEW YORK, US, vol. 53, no. 1-3, 1 June 2002 (2002-06-01) , pages 81-86, XP004352306, ISSN: 1387-1811
- DIMESSO L ET AL: "Synthesis of nanocrystalline Mn-oxides by gas condensation", SOLID STATE IONICS, NORTH HOLLAND PUB. COMPANY. AMSTERDAM; NL, NL, vol. 123, no. 1-4, 1 August 1999 (1999-08-01), pages 39-46, XP004172914, ISSN: 0167-2738, DOI: 10.1016/S0167-2738(99)00107-1
- BASSOU B ET AL: "High-throughput approach to the catalytic combustion of diesel soot II: Screening of oxide-based catalysts", CATALYSIS TODAY, ELSEVIER, NL, vol. 159, no. 1, 10 January 2011 (2011-01-10), pages 138-143, XP027575435, ISSN: 0920-5861 [retrieved on 2010-07-31]
- RADWAN N R E ET AL: "Cordierite as catalyst support for cobalt and manganese oxides in oxidation-reduction reactions", APPLIED CATALYSIS A: GENERAL, ELSEVIER SCIENCE, AMSTERDAM, NL, vol. 274, no. 1-2, 28 October 2004 (2004-10-28), pages 87-99, XP004558603, ISSN: 0926-860X, DOI: 10.1016/J.APCATA.2004.05.032

## Description

### Background of the invention

The present invention refers to a process for preparing an oxidizing catalyst and to a process for preparing a post-treatment system suitable for reducing the emission of pollutants present in an exhaust gas.

Within the framework of the description, the term "exhaust gas" is used to indicate both combustion fumes coming from an internal combustion engine, in particular a diesel engine, or from diesel-fired boilers, and the gaseous exhausts coming from industrial processes and including volatile or oxidisable gaseous pollutants, like for example NOₓ, CO and volatile organic compounds (VOC).

Within the framework of the description, the term "volatile organic compounds" (VOC) is used to indicate organic compounds comprising mainly unburnt hydrocarbons or HC and a smaller amount of compounds containing oxygen, chlorine or other elements, like for example aldehydes, ethers, alcohols and esters.

Within the framework of the description, the term "catalyst" is used to indicate a substance or a coating layer that includes the same, capable of promoting the oxidizing reaction of gaseous pollutants to NO₂, and/or CO₂ and/or H₂O, and/or the combustion reaction of particulate material accumulated in the filter above a critical temperature indicated hereafter by the term ignition temperature or Tᵢ.

Within the framework of the description, the term "catalytically active" is used to indicate the ability of the catalyst described herein or of a coating layer that includes the same, to promote the oxidizing reaction of gaseous pollutants to NO₂, and/or CO₂ and/or H₂O, and/or the combustion reaction of particulate material accumulated in the filter above a critical temperature indicated hereafter by the term ignition temperature or Tᵢ.

### Prior art

The automotive industry is currently strongly committed - also due to the pressure of ever more stricter regulations - to find effective solutions to the problem of removing four main pollutants present in the exhaust gases of internal combustion engines, in particular diesel engines: carbon monoxide (CO), volatile organic compounds (VOC), nitrogen oxides (generally indicated with NOₓ and comprising about 90% of NO and about 10% of NO₂) and particulate material (PM). The solid fraction of the particulate material (soot) consists mainly of particles of carbonaceous material, being extremely small in size and, as such, responsible for the greatly undesired pollution of the so-called "fine particulate" kind and source of considerable environmental and public health problems.

In order to remove the soot particles from the exhaust gases, it was proposed in the art to mount on the exhaust conduits of the engine filtering systems comprising a particulate filter capable of holding the particles which are then burnt (oxidized) at high temperature by means of an operation known with the term of filter regeneration.

This operation, however, cannot be easily carried out essentially because the oxidation of the soot particles accumulated in the filter can occur solely upon reaching an ignition temperature Tᵢ of about 600°C, which cannot be easily achieved by the exhaust gases of the engine, especially during the use of the vehicle at a low speed for example during urban circulation where the temperature of the exhaust gases is generally comprised between 150° and 300°C.

In order to overcome in some way this drawback and thus promoting a more efficient regeneration of the filter, the so-called "active" regeneration methods were proposed, for example by providing additional heat to the filter from an external source or, on alternatively, by reducing the ignition temperature of the particulate material so as to obtain their combustion in an easier way.

Thus, for example, the particulate filter can be provided with heating devices periodically activated for heating the exhaust gases upstream of the filter, or by providing the vehicle with a special tank wherein a cerium oxide precursor (ceria) is stored which precursor is mixed with the fuel and which has the double characteristic of promoting the formation of agglomerates of particles without a chemical bond (more easily "withheld" by the filter) and lowering the ignition temperature of the particles. Then, the filter is periodically "cleaned" by burning the captured agglomerates: this operation is carried out by means of a fuel post-injection thus making the exhaust gases hotter, which exhaust gases heat in turn the agglomerates in the filter burning them.

In order to promote a more efficient regeneration of the filter, the so-called "passive" regeneration methods were also proposed, which are essentially based on the action of catalytic compositions which are suitably supported and distributed inside the filter, in particular on the walls of the gas channels formed in the filter, which catalytic compositions allow to suitably reduce the ignition temperature of the particulate material to values which are more easily achieved by the exhaust gases when the vehicle is travelling.

Within the context of particulate filters which may be regenerated by means of the so-called "passive" methods, document EP 1 356 864 discloses filters including rather complex catalytic compositions made of a base layer including cerium oxide stabilized with a combination of Zr, Sm and Y and a catalytic layer (washcoat) applied on the base layer comprising Ag and cerium oxide stabilized with a combination of the same metals Zr, Sm and Y of the rare earths group; on the other hand, document EP 1 820 561 discloses filters including catalytic compositions containing alumina and a composite oxide containing Ce as the main component and a rare earth group metal different from Ce or an alkaline-earth metal and Pt loaded on the alumina and on the composite oxide.

There is also another system called CRT™ (Continuously Regenerating Trap) that is currently used in heavy vehicles provided with a diesel engine (lorry, bus, etc.) in which the regeneration process takes place continuously.

This system provides an oxidizing device, generally called DOC (Diesel Oxidation Catalyst), which almost completely reduces the CO and the HC present in the exhaust gases converting them into CO₂ and H₂O and oxidises the NO to NO₂ and a particulate filter, generally called DPF (Diesel Particulate Filter), which continuously oxidises the withheld particulate material into CO₂ and/or CO using the NO₂ generated by the oxidizing device that is reduced to N₂ and/or NO.

More particularly, the following reactions occur in the oxidizing device DOC:

HC/CO + O₂ → CO₂ + H₂O

and

NO + O₂ → NO₂

whereas in the particulate filter DPF the following reactions essentially take place:
NO₂ + C (present in the particulate material) → CO₂ + 1/2N₂
NO₂ + C (present in the particulate material) → CO + NO

The DOC (Diesel Oxidation Catalyst) generally comprises an oxidizing device having a honeycomb monolithic structure, of ceramic or metallic material, optionally with the addition of an Al₂O₃ thin layer (washcoat), on which a catalyst is deposited. The use of the metal as substrate allows to have narrower walls, and therefore a greater number of cells per unit surface, lower counterpressure and greater resistance. On the other hand, the ceramic substrate has greater adhesion of the catalyst, lower sensitivity to corrosion and lower costs. In connection with DOCs the catalytic elements commonly used are platinum, palladium or both, dispersed over a wide surface, so as to maximise the contact with the liquid and gaseous emission.

The term particulate filter (DPF) is used to indicate a filtering element of suitable configuration adapted to hold particulate material present in the exhaust gases of an internal combustion engine, in particular diesel engines. Such a filtering element is basically a device that forces the burnt gases to pass through a porous barrier: the particles of dimensions greater than those of the pores are held, whereas the gaseous compounds pass through the filtering wall.

These filters are generally made of ceramic material, with a cell or honeycomb monolithic structure or of metallic material. The ceramic filters are obtained by extrusion of porous ceramic material (for example silicon carbide or cordierite), so as to obtain monolithic cylindrical elements with channels arranged axially and closed alternatively at the ends, to force the gases to pass through the porous walls of the channels, to reach the adjacent conduits after having deposited the particles transported in suspension.

In connection with CRT systems, American patent US 4,902,487 discloses a process wherein the diesel exhaust gas is passed through a filter to remove the particulate and the particulate deposited on the filter is combusted with a gas containing NO₂. In an embodiment, the document US 4,902,487 describes the use of an oxidizing device DOC having a ceramic honeycomb monolithic structure, coated with Pt, upstream of a metallic filter containing a catalyst comprising a combination of lanthanum, cesium and vanadium pentoxide (La/Cs/V₂O₅).

The main defect of CRT filters is that they emit a greater amount of NO₂ (which is five times more toxic than NO) especially when the particulate filter is perfectly clean. In order to remedy this problem a system has been proposed that provides joining the CRT with a system of selective catalytic reduction of the NOₓ (SCR).

The term system of selective catalytic reduction (SCR) is used to indicate a system for reducing nitrogen oxides (NO and NO₂). This is generally by using a reducing agent in liquid or gas state (generally urea or NH3) that is added to the exhaust gases, in the presence of catalyst, and that reacts with the NOₓ forming N₂ and H₂O according to the following chemical reactions:
in the presence of ammonia

   4 NO + 4 NH₃+ O₂ → 4 N₂ + 6 H₂O

   2 NO₂ + 4 NH₃ + O₂ → 3 N₂ + 6 H₂O
in the presence of urea

   2 CO(NH₂)₂ + 4 NO + O₂ → 4 N₂ + 2 CO₂ + 4H₂O

In connection with the SCR system the catalysts generally used consist of a honeycomb monolithic support, generally ceramic, on the porous surface of which a metal is dispersed, commonly vanadium. Other catalysts commonly used are titanium oxide (TiO₂) with large surface area as support and oxides of vanadium (V₂O₅) or tungsten (WO₃) dispersed on the surface. The catalyst allows to carry out the reducing reaction at lower temperatures than selective non-catalytic reduction (SNCR), with an efficiency increasing of the NOₓ reduction.

In connection with SCRs the use of gaseous NH3 creates many problems of application and of safety and therefore urea is preferred as reducing agent. As a matter of fact, urea decomposes at a high temperature developing ammonia, but it has the advantage of being much less toxic, easy to handle and also, since it is liquid, it occupies less space than gaseous NH₃. The SCR thus allows the reaction at temperatures of about 300°C and in short time periods.

In connection with SCR systems associated with CRT systems, American patent US 7,498,010 discloses a system for reducing NOₓ in combustion gases, in particular from diesel engines, which incorporates an oxidizing device to convert at least a portion of NO to NO₂, a particulate filter, a source of reducing agent like NH3, urea or ammonium carbamate and a SCR catalyst. In an embodiment, document US 7,498,010 describes the use of V₂O₅/WO₃/TiO₂ as SCR catalysts on a honeycomb support.

In connection with catalysts that can potentially be used for the regeneration of particulate filters, hereafter we list some documents that describe manganese oxides catalysts. Document V. Sánchez Escribano et al., Combustion and Flame 153 (2008), 97-104 describes a study on the catalytic properties of a manganese oxide (α-Mn₂O₃) supported on a mixed cerium-zirconium oxide (Ce_{0.75}Zr_{0.25}O₂) in the oxidation of the particulate to CO₂ and CO. Document K. Tikhomirov et al., Applied Catalysis B: Environmental 64 (2006), 72-78 describes a study on the catalytic properties of mixed oxides MnOₓ-CeO₂ in the oxidation of the particulate that highlighted a synergic effect of mixed oxides with respect to manganese and cerium oxides taken individually.

Document R. López-Fonseca et al., Applied Catalysis B: Environmental 61 (2005), 150-158 describes a study on the effect of the addition of Mn₂O₃ as additive to the fuel in the oxidation of the particulate.

Document I. Atribak et al., Applied Catalysis B: Environmental 93 (2010), 267-273 describes a study on the catalytic activity of birnessite and cryptomelane (KₓMnO₂) in the oxidation of particulate that are resulted much more active with respect to the pure tested manganese oxides (MnO, MnO₂, Mn₂O₃ and Mn₃O₄).

Japanese patent application JP 2004 230223 describes a CO oxidation catalyst composed of at least one kind of manganese oxide selected from the group of Mn₂O₃, Mn₃O₄ and MnO. Document L. Wang et al., Applied Catalysis B: Environmental 88 (2009), 204-212 describes gold nanoparticles supported on manganese oxides for low-temperature CO oxidation. Japanese patent application JP 2009 125688 describes a method for producing a catalyst comprising an alumina substrate composed of cellular alumina and manganese or an oxide thereof held in fine pores of the alumina substrate.

European patent application EP 1 982 762 discloses a catalyst-supporting honeycomb which can reduce the increase with time in the pressure loss upon an influx of soot. The catalyst supporting honeycomb of this reference includes a pillar-shaped honeycomb structured body having a plurality of cells formed in parallel with one another in a longitudinal direction with a cell wall interposed therebetween, and a catalyst particles supported on the honeycomb structured body. In this structure, an oxide catalyst selected from the group consisting of CeO₂, ZrO₂, FeO₂, Fe₂O₃, CuO, CuO₂, Mn₂O₃, MnO, K₂O, and a composite oxide represented by a composition formula AₙB₁₋ₙCO₃ (in which A represents La, Nd, Sm, Eu, Gd or Y; B represents an alkali metal or an alkali earth metal; C represents Mn, Co, Fe or Ni) may be used for the catalyst particles and the average particle diameter thereof is 0.05 µm to 1.00 µm.

Document Zhao Q. et al, "Effects of processing parameters on the surface area of Mn2O3 at elevated temperatures", Microporous and Mesoporous Materials, vol. 53 (2002), 81-86, describes a synthesis procedure of Mn oxide catalysts using Mn(NO₃)₂ and ammonium hydroxide as reagents, the catalyst solids being dried and calcined in air at 500, 700 and 900°C for 4 hours. According to this reference, low precursor concentration produces Mn₂O₃ powders with large specific surface area at 500°C.

Document L Dimesso et al, "Synthesis of nanocrystalline Mn-oxides by gas condensation", Solid State Ionics, Volume 123, Issues 1-4, August 1999, 39-46, describes the preparation of nanocrystalline (n-) Mn-oxides obtained by oxidation of n-Mn metal, prepared by inert gas condensation, in air and in oxygen at different temperatures and times. After oxidizing between 400 and 600°C the presence of Mn₅O₈ and Mn₂O₃ has been detected, while at higher temperatures (*T*≥600°C) Mn₂O₃ as single phase was observed. According to this reference, after oxidation the average particles size increased from 27 to 43 nm but no further changes of the crystalline phases was observed.

Finally, document Y. Han et al. Catalysis Today 131 (2008), 35-41 describes coral-like nanostructured α-Mn₂O₃ nanocrystals for the catalytic combustion of methane.

### Summary of the invention

In connection with particulate filters which may be regenerated by means of the so-called "active" methods, the Applicant observed that these filters require additional apparatuses for heating the filter or additional apparatuses for dosing ceria, hence substantially complicating both installation and control leading to an undesired cost increase.

The Applicant has also observed that the catalytic elements commonly used for passive regeneration and/or for the oxidation of the pollutants contained in the exhaust gases of internal combustion engines (e.g. platinum, palladium or both), are extremely expensive. The Applicant has therefore set itself the problem of providing a post-treatment system capable of effectively removing, through a low-cost catalyst, one or more of the aforementioned main pollutants (CO, VOC, NOₓ, PM) present in an exhaust gas coming from internal combustion engines, or even from boilers and/or from industrial processes.

Within the framework of the description, therefore, the term "exhaust gas" is used to indicate both combustion fumes coming from an internal combustion engine, in particular a diesel engine, or from diesel-fired boilers, and the gaseous exhausts coming from industrial processes and including oxidisable gaseous or volatile pollutants, like for example NOₓ, CO and VOC.

The Applicant has experimentally found that the manganese oxides described by *I. Atribak et al.* are unable to ensure an adequate removal of the pollutants present in the exhaust gases especially during use of the vehicle at low speed for example during urban circulation as will become clearer hereafter.

The Applicant has, however, surprisingly experimentally found that it is possible to achieve considerable improvements in terms of efficiency and easiness of the removal operations of the pollutants present in the exhaust gases with respect to both Pt catalysts, and to the manganese oxides described by *I. Atribak et al.* through the selection of a suitable surface area (fresh and after ageing) of a catalyst essentially consisting of manganese oxide.

More particularly, according to a first aspect, the present invention relates to a process for preparing an oxidizing catalyst for reducing pollutants present in an exhaust gas essentially consisting of a catalytically effective amount of Mn₂O₃, as defined in attached claim 1.

According to a second aspect thereof, the present invention relates to a process for preparing a post-treatment system, as defined in attached claim 3.

Also disclosed herein, is a post-treatment system of an exhaust gas comprising at least one oxidizing device comprising a body made of a substrate and provided with a plurality of gas channels defined in said body and delimited by walls of said substrate. The walls of said substrate are coated with a catalytically effective amount of a catalyst essentially consisting of Mn₂O₃ obtained by a preparation process according to the invention.

In an aspect, the catalyst essentially consisting of Mn₂O₃ has the following characteristics:
i) a surface area equal to or greater than 10 m²/g when fresh, and
ii) a surface area after ageing smaller than the surface area of the fresh catalyst and equal to or greater than 2 m²/g, said ageing being carried out by:
   - placing an amount equal to 2 g of fresh catalyst in a static air oven;
   - heating said amount of catalyst at a heating rate of 10°C/min up to an ageing temperature of 800°C;
   - maintaining said amount of catalyst at the ageing temperature for a time period of 12 hours; and
   - removing the sample from the oven at the end of the maintaining step.

The term fresh catalyst, is used to indicate the catalyst in the conditions of post-synthesis, before its first use.

The term surface area, is used to indicate the surface of the catalyst (m²) per unit mass (g) of the catalyst itself and it is measured with the BET (Brunauer, Emmett and Teller) technique.

The term catalytically effective amount, is used to indicate the amount of catalyst described herein or of a coating layer that includes the same, to promote the aforementioned reactions of oxidation of gaseous pollutants to NO₂, and/or CO₂ and/or H₂O, and/or of combustion of particulate material accumulated in the filter above the ignition temperature Tᵢ.

Within the framework of the description, the term gaseous pollutants is used to indicate NOₓ, and/or CO and/or VOC.

Within the framework of the description, the term ignition temperature Tᵢ is used to indicate the temperature at which the oxidation of the particulate material accumulated in the filter occurs at such a surface area of the catalyst.

Within the framework of the present description except where otherwise indicated, all numbers expressing amounts, quantities, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated hereafter.

The Applicant has experimentally found that thanks to the aforementioned specific characteristics of surface area that will be further described hereafter, it is possible to provide a catalyst essentially consisting of manganese oxide that achieves a series of very advantageous technical effects, including:
- eliminating the drawbacks linked to the Pt use (undesired reactions, possible poisoning and cost);
- achieving performance in terms of efficiency in the removal of the pollutants and/or in the regeneration of the filtering system that is greatly improved with respect to those (largely insufficient) of manganese oxides of the prior art mentioned above; and
- possibility of using, as catalytically active coating of a system for treating exhaust gas, a catalyst consisting of a manganese oxide that is pure, non-toxic and relatively low cost, with the consequent benefits in terms of environmental impact and low cost.

In a preferred embodiment, the surface area of the fresh catalyst is comprised between 10 and 80 m²/g, more preferably comprised between 14 and 68 m²/g.

In a preferred embodiment, the surface area of the catalyst after ageing is comprised between 2 and 10 m²/g, more preferably comprised between 2 and 7 m²/g.

In this way, the Applicant has found that it is advantageously possible to have, after a certain number of uses, a surface area suitable for preserving the catalytic performance of the catalyst.

In a preferred embodiment, the post-treatment system disclosed herein comprises at least one oxidizing device wherein the gas channels defined in the body are open on opposite sides thereof at both the ends of the gas channels upstream and downstream of the body with respect to a flowing direction of the exhaust gas.

In this way, the oxidizing device integrates an efficient catalysed device of the DOC type.

In a preferred embodiment, the post-treatment system disclosed herein comprises at least one oxidizing device comprising a porous substrate wherein a first half of the gas channels defined in the body is closed at a downstream end of the body with respect to a flowing direction of the exhaust gas and a second half of said channels complementary to said first half is closed at an upstream end of the body with respect to a flowing direction of the exhaust gas.

In this way, the oxidizing device integrates an efficient catalysed device of the DPF type.

In a preferred embodiment, the post-treatment system disclosed herein comprises at least one oxidizing device comprising in sequence: a first body provided with a plurality of gas channels open at opposite sides of the body at both ends of the channels upstream and downstream of the body with respect to a flowing direction of the exhaust gas; and a second body consisting of a porous substrate and provided with a plurality of gas channels wherein a first half of said gas channels is closed at a downstream end of the body with respect to a flowing direction of the exhaust gas and a second half of said channels complementary to said first half is closed at an upstream end of the body with respect to a flowing direction of the exhaust gas.

In a further preferred embodiment, the post-treatment system disclosed herein comprises at least two oxidizing devices in sequence wherein: a first oxidizing device comprises a body provided with a plurality of gas channels open at opposite sides of the body at both ends of the channels upstream and downstream of the body with respect to a flowing direction of the exhaust gas; and a second oxidizing device comprises a body consisting of a porous substrate and provided with a plurality of gas channels wherein a first half of said gas channels is closed at a downstream end of the body with respect to a flowing direction of the exhaust gas and a second half of said channels complementary to said first half is closed at an upstream end of the body with respect to a flowing direction of the exhaust gas.

In a preferred embodiment, the post-treatment system disclosed herein has a particularly effective application in an oxidizing device selected from the group consisting of an oxidizing device (DOC), a particulate filter (DPF) and a combination thereof.

In this way, the post-treatment system disclosed herein integrates as many efficient configurations comprising catalysed bodies or devices of the DOC and DPF type in sequence.

Advantageously, the post-treatment system disclosed herein allows to increase the efficiency of the oxidizing device oxidation and/or of the filter regeneration and, along therewith, to increase the service life and the efficiency of the post-treatment system.

In a preferred embodiment, the post-treatment system disclosed herein further comprises a selective catalytic reduction (SCR) device of the nitrogen oxides by using a reducing agent in liquid or gas state.

Advantageously, the addition of an SCR device, preferably downstream of the DOC or of the DPF, allows to reduce the NOₓ optionally still present in the gases discharged by the system by using a reducing agent, preferably urea.

In a preferred embodiment, the post-treatment system disclosed herein is mounted on the exhaust conduits of an internal combustion engine to reduce the pollutants present in an exhaust gas emitted by such an engine.

Advantageously, the post-treatment system disclosed herein allows to increase the efficiency of the oxidizing device oxidation and/or of the filter regeneration and, along therewith, to increase the service life and the efficiency of the post-treatment system. Preferably, the internal combustion engine is a diesel engine.

Also disclosed herein is a process for oxidising to NO₂, and/or CO₂ and/or H₂O at least part of gaseous pollutants present in an exhaust gas comprising:
a) introducing a stream of said exhaust gas into an oxidizing device comprising a body provided with a plurality of gas channels open at opposite sides of the body at both ends of the channels upstream and downstream of the body with respect to a flowing direction of the exhaust gas and delimited by walls of a substrate forming said body, said walls being coated with a catalyst obtained by the preparation process according to the invention defined above;
b) contacting said gas stream with said catalyst so as to oxidise at least part of gaseous pollutants to NO₂, and/or CO₂ and/or H₂O;
c) discharging from the oxidizing device an exhaust gas having an increased content of NO₂, and/or CO₂ and/or H₂O.

In a preferred embodiment, the process for oxidising gaseous pollutants disclosed herein finds a particularly effective application in the treatment of an exhaust gas emitted by a diesel engine, which is currently widely used both in motor vehicles and in other industrial applications such as electrogen groups, or by diesel-fired boilers, or in the treatment of an exhaust gas that comes from industrial processes.

Also disclosed herein is a process for reducing the emission of particulate material present in an exhaust gas comprising:
a) introducing a stream of said exhaust gas into an oxidizing device for removing said particulate material comprising a body made of a porous substrate and provided with a plurality of gas channels delimited by gas-permeable walls of a substrate forming said body, wherein
   a first half of said channels is closed at a downstream end of said body with respect to the flowing direction of said exhaust gas and a second half of said channels complementary to said first half is closed at an upstream end of said body with respect to the flowing direction of said exhaust gas, and wherein
   said gas-permeable walls are coated with a catalyst obtained by the preparation process according to the invention defined above;
b) passing said gas stream through said gas-permeable walls so as to substantially remove the particulate material from the gas stream and hold the particulate material in contact with said catalyst;
c) burning the particulate material by bringing said catalyst to a temperature equal to or greater than 250°C.

In a preferred embodiment, the process for reducing the emission of particulate material disclosed herein finds a particularly effective application in the treatment of an exhaust gas emitted by an internal combustion engine, in particular a diesel engine.

Advantageously, the process for holding the exhaust gases disclosed herein allows an effective removal of the particulate material upon combustion already from a temperature of 250°C, compatible with use of a vehicle even in an urban circulation and at which the catalyst is already able to accelerate the kinetics of the combustion reaction of the particles.

Also disclosed herein is a catalyst obtained by the preparation process according to the invention and essentially consisting of Mn₂O₃ having:
i) a surface area equal to or greater than 10 m²/g when fresh; and
ii) a surface area after ageing smaller than the surface area of the fresh catalyst and equal to or greater than 2 m²/g, said ageing being carried out by a process comprising:
   - placing an amount equal to 2 g of fresh catalyst in a static air oven;
   - heating said amount of catalyst at a heating rate of 10°C/min up to an ageing temperature of 800°C;
   - maintaining said amount of catalyst at the ageing temperature for a time period of 12 hours; and
   - removing the sample from the oven at the end of the maintaining step.

Advantageously, the catalyst obtained by means of the preparation process according to the invention allows to achieve the technical effects described above and has the further preferred advantageous characteristics that will become clearer hereafter.

Also disclosed herein is the use of the catalyst as described above as catalytically active coating of an oxidizing device of an exhaust gas.

The term solution or aqueous suspension, is used herein to indicate a solution or suspension wherein the used solvent is water or a mixture of water and at least one water-soluble solvent. For the purposes of the invention, water-soluble solvents which may be used can be selected from alcohols, glycols, tetrahydrofuran and dioxane.

Preferably, the aforementioned amino acid is glycine.

Preferably, the aforementioned manganese salt is selected from the group comprising: manganese nitrate, manganese acetate and manganese chloride.

More preferably, the aforementioned manganese nitrate is tetrahydrate.

Advantageously, the process according to the invention for preparing an oxidizing catalyst allows to obtain a catalyst in a reproducible manner with respect to the sintering processes of the prior art, using non-toxic substances, having low environmental impact and low cost. Moreover, the Applicant has surprisingly observed that by adopting the catalyst preparation process according to the invention it is possible to obtain a catalyst having the desired large surface area equal to or greater than 10 m²/g when fresh and, after ageing, chemical-physical characteristics, including a surface area smaller than the surface area of fresh catalyst and equal to or greater than 2 m²/g, such as to maintain the desired characteristics of catalytic efficiency.

The Applicant deems, without however wishing to be bound by any interpretative theory, that the characteristics of catalytic efficiency after ageing of the Mn₂O₃ catalyst obtained by the preparation process according to the invention are linked, in a way that, however, it has not yet been possible to explain in a certain manner, to the aforementioned preparation process, in particular specific highly exothermal conditions that occur during the heat treatment step at a temperature comprised between 500° and 650°C.

Also disclosed herein is a process for preparing a post-treatment system, comprising:
a) providing a body made of a substrate and provided with a plurality of gas channels defined in said body and delimited by walls of said substrate;
b) providing an aqueous suspension comprising Mn₂O₃ obtained by the preparation process according to the invention;
c) impregnating the substrate of the body with said aqueous suspension;
d) heat-treating the substrate thus obtained at a temperature comprised between 300° and 700°C for a time period comprised between 0.5 and 5 h so as to coat the substrate walls with the catalyst in form of solid particles.

Advantageously, this preparation processes of the post-treatment system allows to deposit the catalyst directly on the substrate of the body according to simple and inexpensive methods, simplifying the manufacturing operations to the benefit of the production costs of the post-treatment system.

According to a preferred embodiment, an amount of catalyst comprised between 50 and 500 g per litre of substrate and, more preferably, comprised between 50 and 400 g per litre of substrate is deposited on the aforementioned substrate of the post-treatment system. Advantageously, the aforementioned preparation processes of the post-treatment system allow to obtain a post-treatment system which is more reproducible with respect to the sintering processes of the prior art, using non-toxic substances, having low environmental impact and low cost.

In connection with the aforementioned process for eliminating or minimising the emission of pollutants present in an exhaust gas, for example emitted by an internal combustion engine, it is preferable and advantageous to burn the particulate material by bringing the catalyst to a temperature comprised between 250° and 500°C, more preferably, to a temperature comprised between 300° and 400°C.

The Applicant, has also experimentally found that for the same temperature and combustion conditions, the catalysts and the catalysed systems disclosed herein allow to carry out the combustion of the particulate material and the oxidation of the other pollutants present in an exhaust gas in a much shorter time than that which can be achieved with the catalytic compositions of the prior art.

In a preferred embodiment of the process for preparing the post-treatment system according to the invention, the impregnation of the substrate of the body with the solution or aqueous suspension including the catalyst or its precursors is carried out by dipping the body in this solution or aqueous suspension for a time period which may be easily determined by a man skilled in the art and suitable to achieve a satisfactory impregnation of the substrate and in particular of the internal zones of the body crossed by the exhaust gas stream.

Preferably, the impregnation of the substrate of the body is carried out by dipping the body in the solution or aqueous suspension including the catalyst or its precursors for a time period comprised between a few seconds and 5 minutes.

In this way, it is advantageously possible to carry out a substantially complete impregnation of the body thus allowing a subsequent uniform coating of the walls of the substrate by the catalyst obtained after heat treatment.

### Brief description of the figures

Additional features and advantages of the invention will become more clearly apparent by the following description of some preferred embodiments thereof, given hereinbelow by way of illustration and not of limitation, with reference to the attached drawings. In such drawings:
- figure 1 is a simplified diagram of a post-treatment system for reducing the emission of pollutants present in an exhaust gas emitted by an internal combustion engine comprising at least one oxidizing device;
- figure 2 is a perspective schematic view, in partial cross-section and in partial exploded view and in enlarged scale, of a particulate filter (DPF);
- figure 3 is a cross-sectional view in enlarged scale illustrating one of the gas-permeable walls of a filtering body of the particulate filter (DPF) of figure 2;
- figure 4 is a perspective schematic view, in partial cross-section and in partial exploded view and in enlarged scale, of an oxidizing device (DOC);
- figures 5a and 5b represent an oxidizing device provided with a substrate of the metallic type (Fig. 5a) and, in an alternative embodiment, of the ceramic type (Fig. 5b);
- figure 6 is a simplified diagram of a post-treatment system of exhaust gas made of an oxidizing device (DOC) and a particulate filter (DPF) arranged in sequence;
- figure 7 is a simplified diagram of a post-treatment system of exhaust gas made of an oxidizing device and an SCR device;
- figures 8a and 8b represent the images obtained by a scanning electron microscope (SEM) with a magnification of 100000/120000x relating to a fresh comparative catalyst (Mn₂O₃*), available on the market from Aldrich, (Fig. 8a) and to a fresh catalyst obtained by a preparation process according to the invention (Example 6, Fig. 8b);
- figures 9a and 9b represent the images obtained by a scanning electron microscope (SEM) with a magnification of 50000/60000x relating to an aged comparative catalyst (Mn₂O₃*), available on the market from Aldrich, (Fig. 9a) and to an aged catalyst obtained by a preparation process according to the invention (Example 6, Fig. 9b);
- figure 10 is a graph illustrating the temperature of the CO₂ peak as a function of the surface area of three preferred catalysts obtained by preparation processes according to the invention (Example 1, 3 and 6) and a comparative catalyst (Mn₂O₃*) available on the market from Aldrich;
- figures 11a and 11b represent the images obtained by a scanning electron microscope (SEM) with a magnification of 5000/30000x relating to a fresh catalyst obtained by a preparation process according to the invention (Example 6, Fig. 11a) and to the same aged catalyst (Example 6, Fig. 11b).

### Detailed description of the currently preferred embodiments

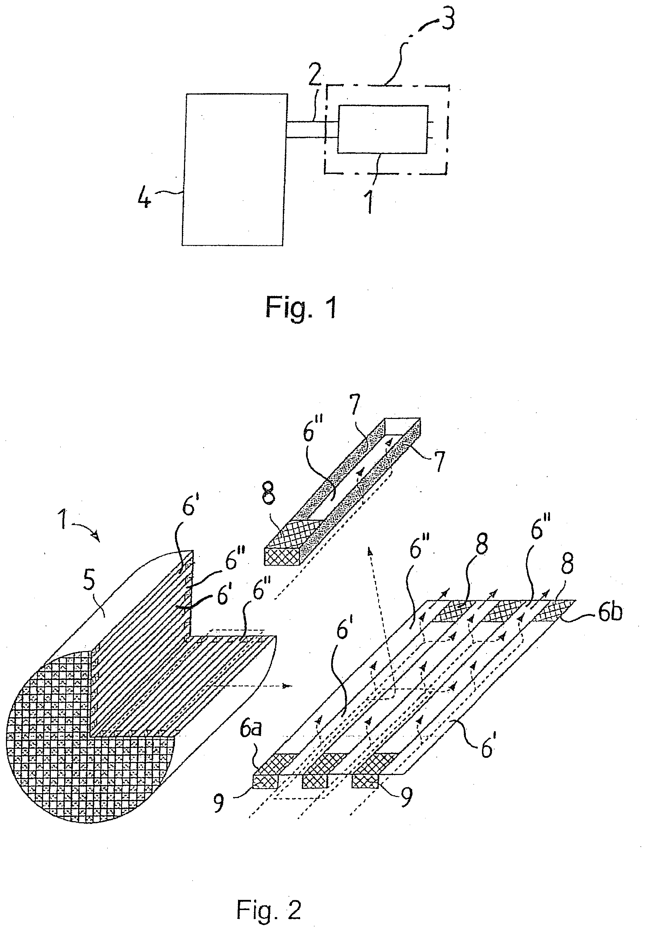

With reference to figure 1, an oxidizing device positioned in an exhaust conduit 2 of a post-treatment system 3 for reducing the emission of pollutants present in an exhaust gas emitted by an internal combustion engine 4, for example a diesel engine, is generally indicated at 1. The post-treatment system 3 is mounted on a vehicle, preferably a car.

As schematically illustrated in figure 2, the oxidizing device 1 can be a particulate filter comprising a filtering body 5, for example of the monolithic type or of the assembled portions type, preferably substantially cylindrical, made of a porous substrate made of a material having a suitable thermal-mechanical resistance at temperatures exceeding 700°C and a suitable corrosion resistance.

The material of the porous substrate can be of the ceramic or metallic type; preferably, such a material is recrystallised silicon carbide and preferably superficially oxidised; alternatively, the material of the porous substrate can be selected from Si-SiC, Si₃N₄, cordierite, Al₂TiO₅, ceramic foam, metal wool or metallic mesh.

The filtering body 5 of the filter 1 has a substantially honeycomb structure comprising a plurality of gas channels 6', 6", adjacent and parallel, defined by gas-permeable walls 7 of said substrate.

More particularly, the filtering body 5 has a structure such that a first half of the gas channels 6' is closed, for example by respective plugs 8, preferably made essentially of the same material as the substrate, at an end 6b downstream with respect to the flowing direction of the exhaust gases according to a substantially chequered configuration so as to form as many inlet channels 6' of the exhaust gases, whereas a second half of the gas channels 6" is closed, for example by respective plugs 9, also preferably made of the same material as the substrate, at an end 6a upstream with respect to the flowing direction of the exhaust gases according to a substantially chequered configuration complementary to the previous one, so as to form as many outlet channels 6" of the exhaust gases.

In this way and as better illustrated by the arrows in figure 2, a path of the exhaust gases is created within the filtering body 5 which allows for the gas entry into the inlet gas channels 6' open at the upstream end 6a thereof, a crossing of the gas-permeable walls 7, the entry into the outlet gas channels 6" open at the downstream end 6b thereof and thus the exit from the filter 1.

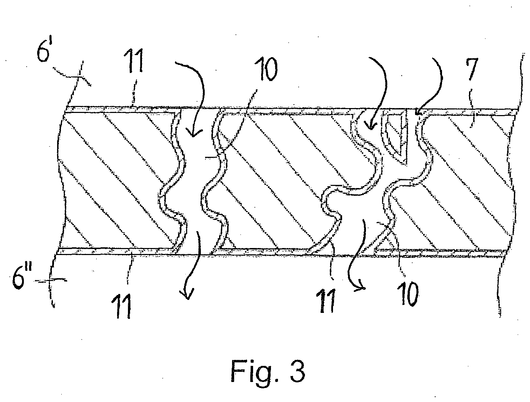

More particularly and as illustrated in figure 3, each gas-permeable wall 7 comprises micropores (gas passage channels) 10 which put the inlet channels 6' of the exhaust gases in communication with the adjacent outlet channels 6" of the exhaust gases so that the exhaust gases flow through the micropores 10 as is better shown by the arrows in such a figure. The particulate material is thus trapped and essentially deposited on the surfaces of the gas-permeable walls 7 of the inlet channels 6' and on the walls of the micropores 10.

The gas-permeable walls 7 and the micropores 10 are coated with at least one layer 11 of a catalytic composition to promote the combustion of the trapped particulate material and, therefore, to promote the passive regeneration of the filter 1 itself already at temperatures compatible with use of a vehicle even in an urban circulation, for example 250-300°C.

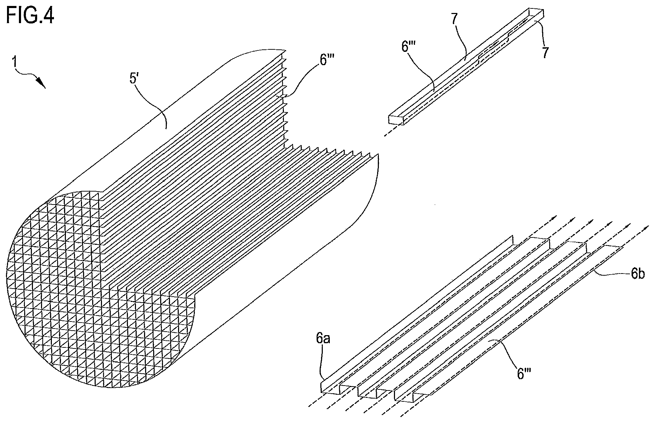

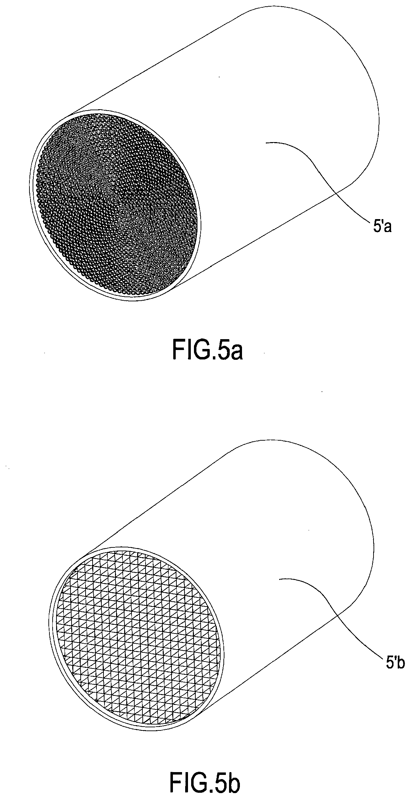

As schematically illustrated in figure 4, the oxidizing device 1 can be an oxidizing device of the DOC type comprising a body 5', for example of the monolithic type, made of a substrate consisting of a material of the metallic 5'a or ceramic 5'b type as illustrated in figures 5a and 5b.

The body 5' of the oxidizing device 1 has a substantially honeycomb structure comprising a plurality of open gas channels 6"', adjacent and parallel, delimited by walls 7 of said substrate.

More particularly, the body 5' of the oxidizing device 1 has a structure such that said channels are open on opposite sides of the body 5' at both the ends upstream 6a and downstream 6b of said body 5' with respect to a flowing direction of the exhaust gas.

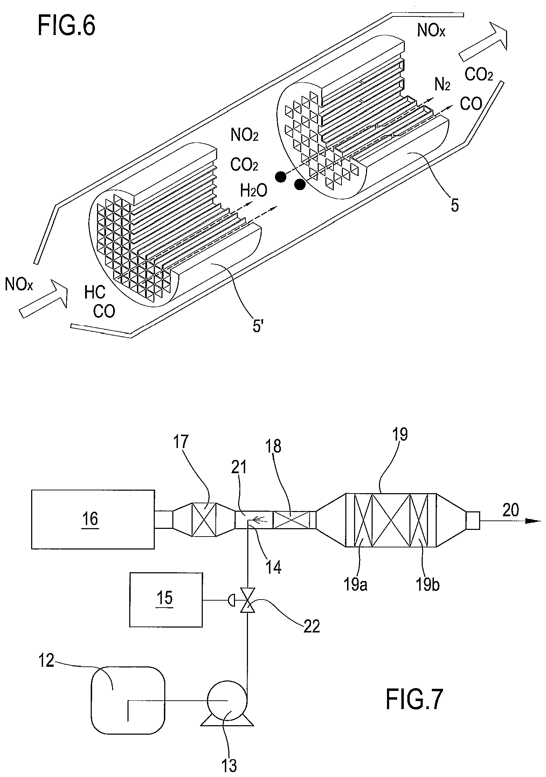

In a preferred embodiment, illustrated in figure 6, the post-treatment system 3 can comprise an oxidizing device (DOC) 5' and a particulate filter (DPF) 5, as defined above, combined in sequence in a system of the CRT™ type (Continuously Regenerating Trap).

In a preferred embodiment, illustrated in figure 7, the post-treatment system 3 comprises an oxidizing device (DOC or CRT™) 17 a mixing section 18 and an SCR device 19 which allows to obtain an exhaust gas 20 with a low NOₓ content.

The mixing section 18 comprises a dispensing device 14, for example comprising one or more nozzles, to inject a suitable reducing compound, for example urea taken from a tank 12 through a pump 13, in a conduit 21 for the passage of the exhaust gases coming from an internal combustion engine 16, for example a diesel engine. The flow rate of the urea injected by the dispensing device 14 is preferably regulated through a control unit 15 that controls an adjustment valve 22 according to the operating parameters of the engine 16.

The mixing section 18 allows to mix the urea sprayed by the dispensing device 14 with the exhaust gas and preferably comprises a suitable static mixer, for example a metallic net, a metallic sponge, metal foils or other devices that allow to promote a close contact between the liquid phase (urea) and the gaseous phase (exhaust gas) and/or to create turbulence that promotes mixing.

The SCR device 19 comprises a first hydrolysis section 19a that decomposes the urea to ammonia according to the following reaction:

CO(NH₂)₂ + H₂O → 2NH₃ + CO₂

and a second oxidation section 19b, in the presence of a catalyst, in which the ammonia reacts with the NOₓ forming N₂ and H₂O according to the following chemical reactions:

NO + NO₂ + 2NH₃ → 2N₂ + 3H₂O

4NO + 4NH₃ + O₂ → 4N₂ + 6H₂O

6NO₂ + 8NH₃ → 7N₂ + 12H₂O

4NH₃ + 3O₂ → 2N₂ + 6H₂O

The results of a series of experimental tests carried out by the Applicant with the aim of proving the improved performance of the post-treatment systems and of the catalyst obtained by the preparation processes according to the present invention shall be provided in the following examples, merely provided by way of illustration and not of limitation.

The performance of some catalysts obtained by a preparation process according to the invention have also been evaluated, with respect to some comparative catalysts by means of analysis of the emitted gases in programmed oxidation conditions (TPO-EGA - Temperature Programmed Oxidation - Evolved Gas Analysis) at variable temperature.

In the following examples, the surface area is measured through the BET technique using an ASAP 2010 analyser from Micromeritics.

### EXAMPLE 1

### Preparation of Mn₂O₃ with surface area equal to 14 m²/g

A first catalyst obtained by a preparation process according to the invention was prepared as follows.

In a crucible 2.283 g of urea and 6.36 g of Mn(NO₃)₂ x 4 H₂O were added to 15 ml of distilled H₂O, the resulting mixture was set on a magnetic stirrer for 15 minutes without heating. The crucible covered by a mesh was then placed in a pre-heated oven at 670 °C, for 20 minutes after having lowered the temperature to 650 °C.

At the end of the reaction 2 g of Mn₂O₃ were obtained with a surface area equal to 14 m²/g.

### EXAMPLE 2

### Preparation of Mn₂O₃ with surface area equal to 26.3 m²/g

A second catalyst obtained by a preparation process according to the invention was prepared as follows.

In a crucible 1.52 g of urea and 6.36 g of Mn(NO₃)₂ x 4 H₂O were added to 10 ml of distilled H₂O, the resulting mixture was set on a magnetic stirrer for 15 minutes without heating. The crucible covered by a mesh was then placed in a pre-heated oven a 670 °C, for 20 minutes after having lowered the temperature to 650 °C.

At the end of the reaction 2 g of Mn₂O₃ were obtained with a surface area equal to 26.3 m²/g.

### EXAMPLE 3

### Preparation of Mn₂O₃ with surface area equal to 30.83 m²/g

A third catalyst obtained by a preparation process according to the invention was prepared as follows.

In a crucible 0.95 g of glycine and 6.36 g of Mn(NO₃)₂ x 4 H₂O were added to 10 ml of distilled H₂O, the resulting mixture was set on a magnetic stirrer for 15 minutes without heating.

The crucible covered by a mesh was then placed in a pre-heated oven at 670 °C, for 20 minutes after having lowered the temperature to 650 °C.

At the end of the reaction 2 g of Mn₂O₃ were obtained with a surface area equal to 30.83 m²/g.

### EXAMPLE 4

### Preparation of Mn₂O₃ with surface area equal to 48.7 m²/g

A fourth catalyst obtained by a preparation process according to the invention was prepared as follows.

In a crucible 0.95 g of glycine and 6.36 g of Mn(NO₃)₂ x 4 H₂O were added to 5 ml of distilled H₂O, the resulting mixture was set on a magnetic stirrer for 15 minutes without heating.

The crucible covered by a mesh was then placed in a pre-heated oven at 670 °C, for 20 minutes after having lowered the temperature to 650 °C.

At the end of the reaction 2 g of Mn₂O₃ were obtained with a surface area equal to 48.7 m²/g.

### EXAMPLE 5

### Preparation of Mn₂O₃ with surface area equal to 61 m²/g

A fifth catalyst obtained by a preparation process according to the invention was prepared as follows.

In a crucible 0.95 g of glycine and 6.36 g of Mn(NO₃)₂ x 4 H₂O were added to 10 ml of distilled H₂O, the resulting mixture was set on a magnetic stirrer for 15 minutes without heating.

The crucible covered by a mesh was then placed in a pre-heated oven at 530 °C, for 20 minutes after having lowered the temperature to 500 °C.

At the end of the reaction 2 g of Mn₂O₃ were obtained with a surface area equal to 61 m²/g.

### EXAMPLE 6

### Preparation of Mn₂O₃ with surface area equal to 68.6 m²/g

A sixth catalyst obtained by a preparation process according to the invention was prepared as follows.

In a crucible, having double the dimensions of those normally used, 0.95 g of glycine and 6.36 g of Mn(NO₃)₂ x 4 H₂O were added to 10 ml of distilled H₂O, the resulting mixture was set on a magnetic stirrer for 15 minutes without heating.

The crucible covered by a mesh was then placed in a pre-heated oven at 530 °C, for 20 minutes after having lowered the temperature to 500 °C.

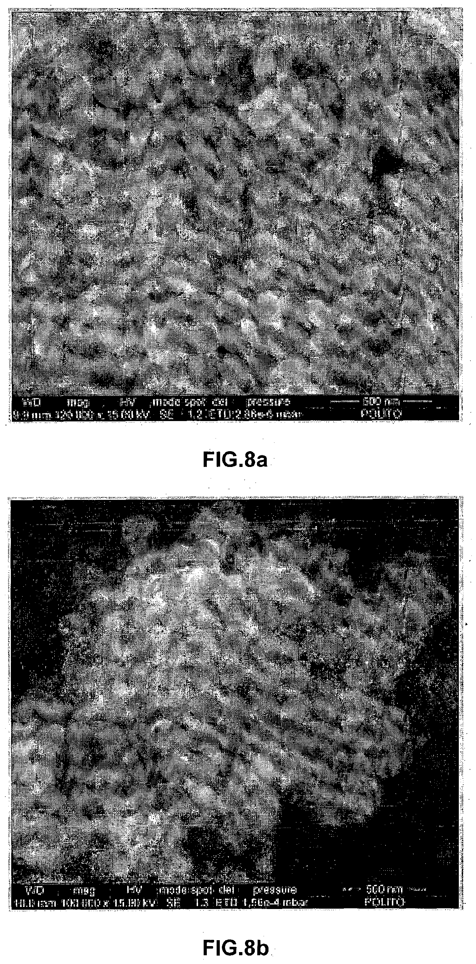

At the end of the reaction 2 g of Mn₂O₃ were obtained with a surface area equal to 68.6 m²/g as illustrated in figure 8b.

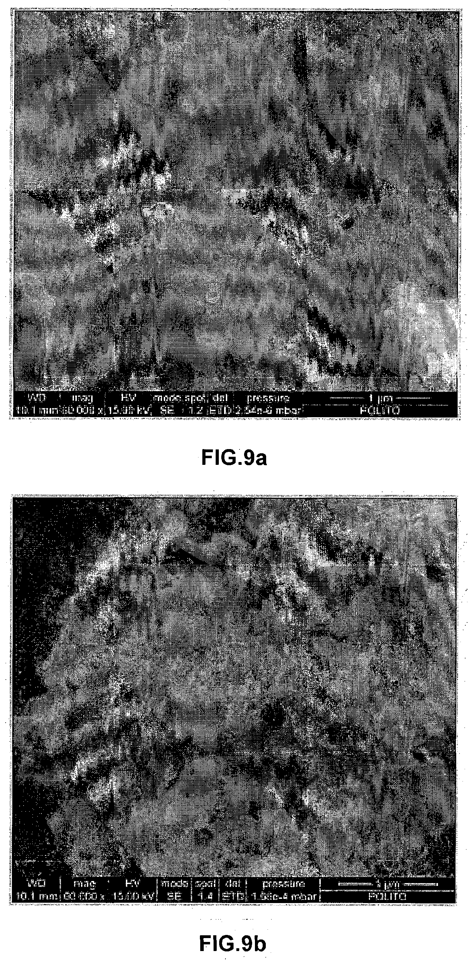

With reference to figures 8a-8b and 9a-9b, the Applicant has observed that when fresh both the catalyst reference sample (Fig. 8a), and the catalyst sample obtained by a preparation process according to the invention (Example 6, Fig. 8b) have a porous structure with particles having average size of less than 1 micron. After ageing, the catalyst reference sample (Fig. 9a) almost entirely lost the porous structure with a decrease in surface area (even if not detectable due to the tolerance of the detection instrument), whereas the catalyst sample obtained by a preparation process according to the invention (Example 6, Fig. 9b) maintains it, with particles having a larger average size with respect to the average size of the fresh particles, but in any case less than a micron and with a surface area in any case greater than 2 m²/g (6.7 m²/g, Table 1).

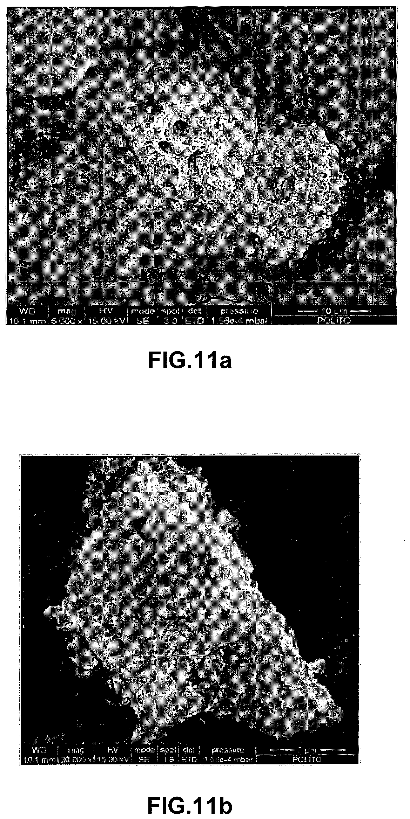

In particular, with reference to figures 11a-11b, the Applicant has observed that the catalyst sample obtained by a preparation process according to the invention (Example 6) both fresh and after ageing has a sponge-like structure formed by single nanoparticles linked together, resulting in a random arrangement of holes and cavities. The holes have a roundish shape and most are merged together forming bigger holes with an irregular shape (Phil. Trans. R. Soc. A (2009) 367, 1783-1798).The Applicant, has also experimentally found that maintaining a porous and, in particular, sponge-like structure, with a surface area equal to or greater than 2 m²/g, of the catalyst particles, even after ageing, can be linked to maintaining acceptable values from the practical point of view of the catalytic efficiency of the catalyst itself.

### EXAMPLE 7

### (Evaluation of the catalytic activity of the catalysts obtained by a preparation process according to the invention by TPO-EGA analysis)

A commercial Mn₂O₃ catalyst from Aldrich (CAS 1317-34-6) with a surface area equal to 0.5 m²/g and two comparative Pt catalysts and the catalysts obtained by a preparation process according to the invention of examples 1, 3 and 6, prepared as described above, were subjected to analysis of the emitted gases in programmed oxidation conditions (TPO-EGA) in order to verify their catalytic efficiency in an oxidizing device of the DPF type. More specifically, these analyses were carried out according to the following experimental protocol.

### TPO-DPF: Sample preparation

For the evaluation of the post-treatment system as particulate filter (DPF), an oven was used equipped with a temperature ramp equal to 5°C/min, starting from room temperature equal to 25°C up to a temperature equal to 600°C. The sample was prepared in a ball mill by mixing particulate material of the artificial type (Printex U, Degussa) and the catalyst according to a 1:9 weight ratio. The mixture was then under stirring for about 20 minutes. Then 50 mg of the powder thus obtained was taken and 250 mg of silica were added to this, so as to avoid the packing together of the catalytic bed subjected to the stream. The catalytic bed thus obtained was placed inside a U-shaped quartz tube between two layers of quartz wool, to avoid the powder being pulled by the gaseous flow to which the sample is subjected. The analysis of the gases emitted was carried out by chemiluminescence (EcoPhysics analyser) and NDIR (Non-Dispersive-Infrared Detection, ABB analyser).

More particularly, these analyses were carried out using a gaseous flow with flow rate of 100 ml/min with the following characteristics:

| Gas | Inlet flow rate (ml/min) | % | Analyser range |
|---|---|---|---|
| O₂ | 10 | 10 | - |
| N₂ | 85 | 89.95 | - |
| NO (1% in N₂) | 5 | 0.05 | 0-2500 (ppm) |
| CO (2% in N₂) | - | - | 0-3000 (ppm) |
| CO₂ | - | - | 0-10 (% volume) |
| Propane (1% in N₂) | - | - | - |

The aged comparative catalysts and those obtained by a preparation process according to the invention were tested with the same protocol followed by the ageing process reported above.

As shown in Table 1, during the course of the experimentation suitable for evaluating the performance of the catalyst for use in an oxidizing device DPF, the CO₂ peak indicating a complete combustion of the particulate material was measured in the gas emitted.

The CO₂ peak corresponds to the maximum speed of the combustion reaction observed in the experimental conditions so that the corresponding peak temperature can in turn be linked with the catalytic efficiency of the specific material analysed.

The following Table 1 shows the data of the measurements carried out using three catalysts obtained by a preparation process according to the invention and a comparative commercial Mn₂O₃ catalyst from Aldrich (CAS 1317-34-6). Table 1 also shows as comparative terms the data detected by mixing 12.6 mg of particles of particulate material (Printex® U) with 1.4 mg of Pt/Al₂O₃ catalyst (1% and 5% by weight) (Sigma Aldrich).

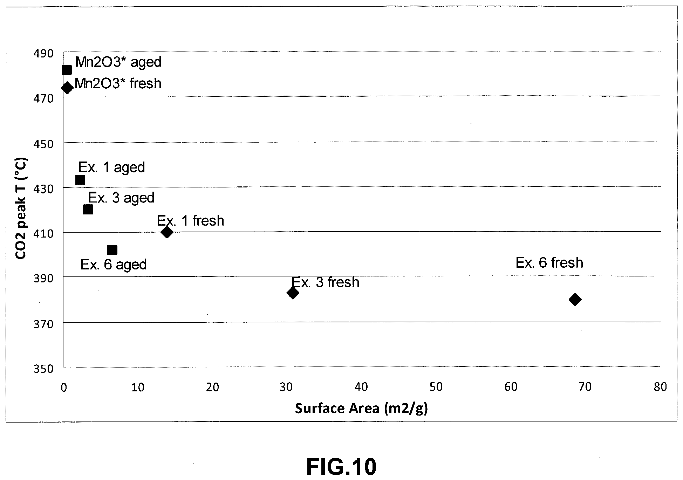

The results of the tests carried out have also been shown graphically in figure 10 for a more immediate visual evaluation.

**TABLE 1**

| (Evaluation of the catalytic activity for oxidizing devices DPF by TPO-EGA analyses) | | | | |
|---|---|---|---|---|
| Catalyst | Catalyst surface area (m²/g) | Catalyst surface area (m²/g) | CO₂ Peak T (°C) | CO₂ Peak T (°C) |
| | Fresh cat. | Aged cat. | Fresh cat. | Aged cat. |
| Pt 1% by weight (comp) | n.d. | n.d. | 450 | n.d. |
| Pt 5% by weight (comp) | n.d. | n.d. | 445 | n.d. |
| Mn₂O₃* (comp) | 0.5 | n.d. | 474 | 482 |
| Example 1 | 14 | 2.6 | 410 | 433 |
| Example 3 | 30.83 | 3.41 | 383 | 420 |
| Example 6 | 68.6 | 6.7 | 380 | 402 |

| | | | | |
|---|---|---|---|---|
| Mn₂O₃* = Mn₂O₃ from Aldrich (CAS 1317-34-6) comp = comparative catalyst n.d. = not detectable cat. = catalyst | | | | |

### TPO-DOC: Sample preparation

To evaluate the performance of the catalyst for use in an oxidizing device DOC, an oven was used equipped with a temperature ramp equal to 5°C/min, starting from room temperature equal to 25°C up to a temperature equal to 600°C. The sample was prepared by mixing 50 mg of the catalyst with 250 mg of silica, so as to avoid the packing together of the catalytic bed subjected to the stream. The catalytic bed thus obtained was placed inside a U-shaped quartz tube between two layers of quartz wool, to avoid the powder being pulled by the gaseous flow to which the sample is subjected. The analysis of the gases emitted was carried out by chemiluminescence (EcoPhysics analyser) and NDIR (Non-Dispersive-Infrared Detection, ABB analyser).

More particularly, these analyses were carried out using a gaseous flow with flow rate of 100 ml/min with the following characteristics:

| Gas | Inlet flow rate (ml/min) | % | Analyser range |
|---|---|---|---|
| O₂ | 10 | 10 | - |
| N₂ | 64.5 | 89.62 | - |
| NO(1% in N₂) | 5 | 0.05 | 0-2500 (ppm) |
| CO (2% in N₂) | 12.5 | 0.25 | 0-3000 (ppm) |
| CO₂ | - | - | 0-10 (% volume) |
| Propane (1% in N₂) | 8 | 0.08 | - |

The aged comparative catalysts and those obtained by a preparation process according to the invention were tested with the same protocol followed by the ageing process given above.

As shown in Tables 2-3, during the course of the experimentation the temperature indicating a complete conversion of the unburnt hydrocarbons (HC) and of the carbon monoxide (CO) to CO₂ and the temperature corresponding to the maximum conversion of NO to NO₂ were measured in the gas emitted.

The following Tables 2-3 show the data of the measurements carried out using two catalysts obtained by a preparation process according to the invention and a comparative Mn₂O₃ catalyst from Aldrich (CAS 1317-34-6). Tables 2-3 also give as comparative terms the data detected with a Pt/Al₂O₃ catalyst (1% by weight) (Sigma Aldrich).

**TABLE 2**

| (Evaluation of the catalytic activity for oxidizing devices DOC by TPO-EGA analyses) | | | | |
|---|---|---|---|---|
| Catalyst | THC (100% conv) | TCO (100% conv) | THC (100% conv) | TCO (100% conv) |
| | Fresh cat. | Fresh cat. | Aged cat. | Aged cat. |
| Pt 1% By weight (comp) | 520°C | 150°C | 606°C | 239°C |
| Mn₂O₃* (comp) | 600°C | 605°C | - | - |
| Example 3 | 394°C | 333°C | 492°C | 361°C |
| Example 6 | 376°C | 280°C | 553°C | 395°C |

| | | | | |
|---|---|---|---|---|
| Mn₂O₃* = Mn₂O₃ from Aldrich (CAS 1317-34-6) comp = comparative catalyst cat. = catalyst | | | | |

**TABLE 3**

| (Evaluation of the catalytic activity for oxidizing devices DOC by TPO-EGA analyses) | | | | |
|---|---|---|---|---|
| Catalyst | NO max convers. T | NO max convers. % | NO max convers. T | NO max convers. % |
| | Fresh cat. | Fresh cat. | Aged cat. | Aged cat. |
| Pt 1% By weight (comp) | 171 | 99% | 72 | 14.3% |
| Mn₂O₃* (comp) | 600 | 61% | - | - |
| Example 3 | 299 | 84% | 376 | 59.4% |
| Example 6 | 237 | 97% | 111 | 23% |

| | | | | |
|---|---|---|---|---|
| Mn₂O₃* = Mn₂O₃ from Aldrich (CAS 1317-34-6) comp = comparative catalyst cat. = catalyst | | | | |

In the aforementioned Tables 1-3 the advantages of the use of the catalysts obtained by the preparation process according to the invention with respect to the use of a Pt catalyst, as well as with respect to the use of a commercial manganese oxide, are evident. More particularly, the catalysts obtained by the preparation process of the present invention have a low cost and low environmental impact with respect to Pt. Moreover, the aforementioned Tables show that the catalysts obtained by the preparation process of the invention have higher activity in the combustion of the particulate material (Table 1), as well as higher activity (lower temperatures) in the total conversion of HC with respect to Pt and to commercial manganese oxide from Aldrich (Table 2). Moreover, from Table 2 a total CO conversion of the catalysts obtained by the preparation process of the invention at lower temperatures with respect to the manganese oxide of Aldrich is evident.

Finally, Table 3 shows a higher activity in the NO conversion, after ageing, of the catalysts obtained by the preparation process according to the invention with respect to the Pt catalyst and a higher activity of the catalysts obtained by the preparation process of the present invention, when fresh, with respect to the commercial manganese oxide of Aldrich.

By comparing the experimental data reported in the aforementioned Tables 1-3 and in figure 10 it is evident that the post-treatment system and the catalysts obtained by the preparation process of the present invention having a surface area equal to or greater than 10 m²/g for the fresh catalyst and smaller than the surface area of fresh catalyst and equal to or greater than 2 m²/g for the catalyst after ageing, allow to substantially improve the efficiency of the removal operations of the pollutants (CO, HC, NOₓ and PM) with respect to what is made possible by the catalysts of the prior art described above.

As a matter of fact, both a drastic reduction of the ignition temperature Tᵢ of the particulate material, and a considerable increase of the oxidation speed of such particles was experimentally observed in the same experimental conditions and, this, along with the additional advantages of using inexpensive reagents having a low environmental impact. The Applicant has also observed that the selection of a suitable surface area of the catalyst when fresh or after ageing triggers quite unexpectedly the advantageous effect of a marked reduction of the ignition temperature Tᵢ of the particulate material and a further considerable increase of the oxidation speed of such particles, as well as of the other pollutants.

This effect was particularly marked even after ageing despite a marked reduction in surface area of the catalyst.

Lastly, the analysis of the emitted gases in programmed oxidation conditions (TPO-EGA) enabled to experimentally observe that the catalyst obtained by the preparation process of the present invention and thus the possible post-treatment system thus coated allow to achieve a complete removal of the pollutants habitually present in the exhaust gases during the thermal conditions typical of use of the vehicle at low speed for example during urban circulation.

## Claims

1. Process for preparing an oxidizing catalyst for reducing pollutants present in an exhaust gas essentially consisting of a catalytically effective amount of Mn₂O₃, wherein the process comprises:
a) preparing by mixing an aqueous solution comprising an amino acid and/or urea and/or ammonium nitrate, and a manganese salt;
b) heat-treating the aqueous solution thus obtained in a pre-heated oven at a temperature comprised between 500° and 650°C for a time period comprised between 10 minutes and 1 hour so as to obtain a catalyst having:
i) a surface area equal to or greater than 10 m²/g in a condition of post-synthesis before its first use, and
ii) a surface area after ageing smaller than said surface area of the catalyst in the conditions of post-synthesis before its first use and equal to or greater than 2 m²/g, said ageing being carried out by:
- placing an amount equal to 2 g of catalyst in said condition of post-synthesis before its first use, in a static air oven;
- heating said amount of catalyst at a heating rate of 10°C/min up to an ageing temperature of 800°C;
- maintaining said amount of catalyst at the ageing temperature for a time period of 12 hours; and
- removing the sample from the oven at the end of the maintaining step.

2. Process according to claim 1, wherein said amino acid is glycine and said manganese salt is manganese nitrate.

3. Process for preparing a post-treatment system, comprising:
a) providing a body made of a substrate and provided with a plurality of gas channels defined in said body and delimited by walls of said substrate;
b) providing an aqueous solution comprising an amino acid and/or urea and/or ammonium nitrate, and a manganese salt;
c) impregnating the substrate of the body with said aqueous solution;
d) heat-treating the substrate thus obtained at a temperature comprised between 500° and 650°C for a time period comprised between 10 minutes and 1 hour so as to coat the substrate walls with a catalyst in form of solid particles of Mn₂O₃ having:
i) a surface area equal to or greater than 10 m²/g in the conditions of post-synthesis before its first use, and
ii) a surface area after ageing smaller than the surface area of the catalyst in the conditions of post-synthesis before its first use and equal to or greater than 2 m²/g, said ageing being carried out by:
- placing an amount equal to 2 g of catalyst in said condition of post-synthesis before its first use, in a static air oven;
- heating said amount of catalyst at a heating rate of 10°C/min up to an ageing temperature of 800°C;
- maintaining said amount of catalyst at the ageing temperature for a time period of 12 hours; and
- removing the sample from the oven at the end of the maintaining step.

4. Process according to claim 3, wherein said amino acid is glycine and said manganese salt is manganese nitrate.

## Patentansprüche

1. Verfahren zur Herstellung eines Oxidationskatalysators, der im Wesentlichen aus einer katalytisch wirksamen Menge von Mn₂O₃ besteht, zur Reduzierung von Schadstoffen, die in einem Abgas vorhanden sind, wobei das Verfahren umfasst:
a) Herstellen durch Mischen einer wässrigen Lösung umfassend eine Aminosäure und/oder Harnstoff und/oder Ammoniumnitrat und ein Mangansalz;
b) Wärmebehandeln der so erhaltenen wässrigen Lösung in einem vorgeheizten Ofen bei einer Temperatur, die zwischen 500 °C und 650 °C liegt, für eine Zeitperiode zwischen 10 Minuten und 1 Stunde, um einen Katalysator zu erhalten, der aufweist:
i) eine Oberfläche gleich oder größer als 10 m²/g in einem Zustand nach der Synthese und vor seiner ersten Verwendung, und
ii) eine Oberfläche nach Alterung kleiner als die Oberfläche des Katalysators unter den Bedingungen der Synthese und vor seiner ersten Verwendung, und gleich oder größer als 2 m²/g, wobei die Alterung erfolgt durch:
- Platzieren einer Menge gleich 2 g des Katalysators unter den Bedingungen nach der Synthese vor seiner ersten Verwendung in einen statischen Luftofen;
- Erhitzen der Menge des Katalysators mit einer Aufheizrate von 10 °C/min auf eine Alterungstemperatur von 800 °C;
- Halten der Menge des Katalysators auf der Alterungstemperatur für eine Zeitperiode von 12 Stunden;
und
- Entfernen der Probe aus dem Ofen am Ende des Halteschritts.

2. Verfahren nach Anspruch 1, wobei die Aminosäure Glycin ist und das Mangansalz Mangannitrat ist.

3. Verfahren zur Herstellung eines Nachbehandlungssystems, umfassend:
a) Bereitstellen eines Körpers, der aus einem Substrat besteht und mit einer Vielzahl von Gaskanälen versehen ist, die in dem Körper definiert sind und durch Wände aus dem Substrat begrenzt werden;
b) Bereitstellen einer wässrigen Lösung umfassend eine Aminosäure und/oder Harnstoff und/oder Ammoniumnitrat und ein Mangansalz;
c) Imprägnieren des Substrats des Körpers mit der wässrigen Lösung;
d) Wärmebehandeln der so erhaltenen wässrigen Lösung in einem vorgeheizten Ofen bei einer Temperatur, die zwischen 500 °C und 650 °C liegt, für eine Zeitperiode zwischen 10 Minuten und 1 Stunde, um die Substratwände mit einem Katalysator in Form von festen Partikeln aus Mn₂O₃ zu beschichten; wobei der Katalysator aufweist:
i) eine Oberfläche gleich oder größer als 10 m²/g unter den Bedingungen nach der Synthese und vor seiner ersten Verwendung, und
ii) eine Oberfläche nach Alterung kleiner als die Oberfläche des Katalysators unter den Bedingungen der Synthese und vor seiner ersten Verwendung, und gleich oder größer als 2 m²/g, wobei die Alterung erfolgt durch:
- Platzieren einer Menge gleich 2 g des Katalysators unter den Bedingungen nach der Synthese vor seiner ersten Verwendung in einen statischen Luftofen;
- Erhitzen der Menge des Katalysators mit einer Aufheizrate von 10 °C/min auf eine Alterungstemperatur von 800 °C;
- Halten der Menge des Katalysators auf der Alterungstemperatur für eine Zeitperiode von 12 Stunden;
und
- Entfernen der Probe aus dem Ofen am Ende des Halteschritts.

4. Verfahren nach Anspruch 3, wobei die Aminosäure Glycin ist und das Mangansalz Mangannitrat ist.

## Revendications

1. Procédé de préparation d'un catalyseur d'oxydation pour réduire les polluants présents dans un gaz d'échappement constitué essentiellement d'une quantité catalytiquement efficace de Mn₂O₃, dans lequel le procédé comprend :
a) la préparation par mélange d'une solution aqueuse comprenant un acide aminé et/ou de l'urée et/ou du nitrate d'ammonium, et un sel de manganèse ;
b) le traitement thermique de la solution aqueuse ainsi obtenue dans un four préchauffé à une température comprise entre 500° et 650°C pendant une durée comprise entre 10 minutes et 1 heure de manière à obtenir un catalyseur ayant :
i) une surface spécifique supérieure ou égale à 10 m²/g dans une condition de post-synthèse avant sa première utilisation, et
ii) une surface spécifique après vieillissement inférieure à ladite surface spécifique du catalyseur dans les conditions de post-synthèse avant sa première utilisation et supérieure ou égale à 2 m²/g, ledit vieillissement étant effectué par :
- introduction d'une quantité égale à 2 g de catalyseur dans ladite condition de post-synthèse avant sa première utilisation, dans un four à air statique ;
- chauffage de ladite quantité de catalyseur à une vitesse de chauffage de 10°C/min jusqu'à une température de vieillissement de 800°C ;
- maintien de ladite quantité de catalyseur à la température de vieillissement pendant une durée de 12 heures ; et
- retrait de l'échantillon du four à la fin de l'étape de maintien.

2. Procédé selon la revendication 1, dans lequel ledit acide aminé est la glycine et ledit sel de manganèse est le nitrate de manganèse.

3. Procédé de préparation d'un système de post-traitement, comprenant le fait :
a) de fournir un corps constitué d'un substrat et pourvu d'une pluralité de canaux de gaz définis dans ledit corps et délimités par des parois dudit substrat ;
b) de fournir une solution aqueuse comprenant un acide aminé et/ou de l'urée et/ou du nitrate d'ammonium, et un sel de manganèse ;
c) d'imprégner le substrat du corps de ladite solution aqueuse ;
d) de traiter thermiquement le substrat ainsi obtenu à une température comprise entre 500° et 650°C pendant une durée comprise entre 10 minutes et 1 heure de manière à revêtir les parois du substrat d'un catalyseur sous forme de particules solides de Mn₂O₃ ayant :
i) une surface spécifique supérieure ou égale à 10 m²/g dans les conditions de post-synthèse avant sa première utilisation, et
ii) une surface spécifique après vieillissement inférieure à la surface spécifique du catalyseur dans les conditions de post-synthèse avant sa première utilisation et supérieure ou égale à 2 m²/g, ledit vieillissement étant effectué par :
- introduction d'une quantité égale à 2 g de catalyseur dans ladite condition de post-synthèse avant sa première utilisation, dans un four à air statique ;
- chauffage de ladite quantité de catalyseur à une vitesse de chauffage de 10°C/min jusqu'à une température de vieillissement de 800°C ;
- maintien de ladite quantité de catalyseur à la température de vieillissement pendant une durée de 12 heures ; et
- retrait de l'échantillon du four à la fin de l'étape de maintien.

4. Procédé selon la revendication 3, dans lequel ledit acide aminé est la glycine et ledit sel de manganèse est le nitrate de manganèse.
